# EUROPÄISCHE PATENTANMELDUNG

(11) **EP 3 708 543 A1**
(43) Veröffentlichungstag der Anmeldung: **16.09.2020**
(21) Anmeldenummer: 20162516.7
(22) Anmeldetag: 11.03.2020
(51) Int. Cl.: C02F 1/467, A61L 2/03, C02F 1/461, C02F 103/02

(54) **VERFAHREN UND VORRICHTUNG ZUR WASSERBEARBEITUNG SOWIE REINIGUNGSFLÜSSIGKEIT**

(30) Priorität: 12.03.2019 DE 102019106305
(71) Anmelder: Aquama Switzerland GmbH, 1197 Prangins (CH)
(72) Erfinder: Fetaj, Nazmi, 72762 Reutlingen (DE)
(74) Vertreter: Roche, von Westernhagen & Ehresmann

(57) **Zusammenfassung**

Verfahren, insbesondere zur Herstellung einer Reinigungsflüssigkeit, umfassend das Durchleiten einer wässrigen Lösung durch eine, insbesondere elektrochemische, Bearbeitungsvorrichtung, welche ein Elektrodenpaar umfasst, das von der wässrigen Lösung, insbesondere zu deren Aktivierung, durchströmt wird.

Um ein vereinfachtes Verfahren der Wasserbearbeitung, insbesondere zur Herstellung einer Reinigungsflüssigkeit, bereitzustellen, ist der Bereich zwischen den Elektroden des Elektrodenpaares vermischungsoffen ausgebildet, insbesondere frei von einer Membrane oder einem Diaphragma.

## Beschreibung

Die Erfindung betrifft gemäß einem ersten Aspekt ein Verfahren zur Wasserbearbeitung, insbesondere zur Herstellung einer Reinigungsflüssigkeit.

Aus dem Stand der Technik ist ein "elektrochemische Aktivierung" genanntes Verfahren seit längerer Zeit bekannt, bei welchem eine wässrige Salzlösung dazu genutzt wird, Reinigungsflüssigkeiten herzustellen.

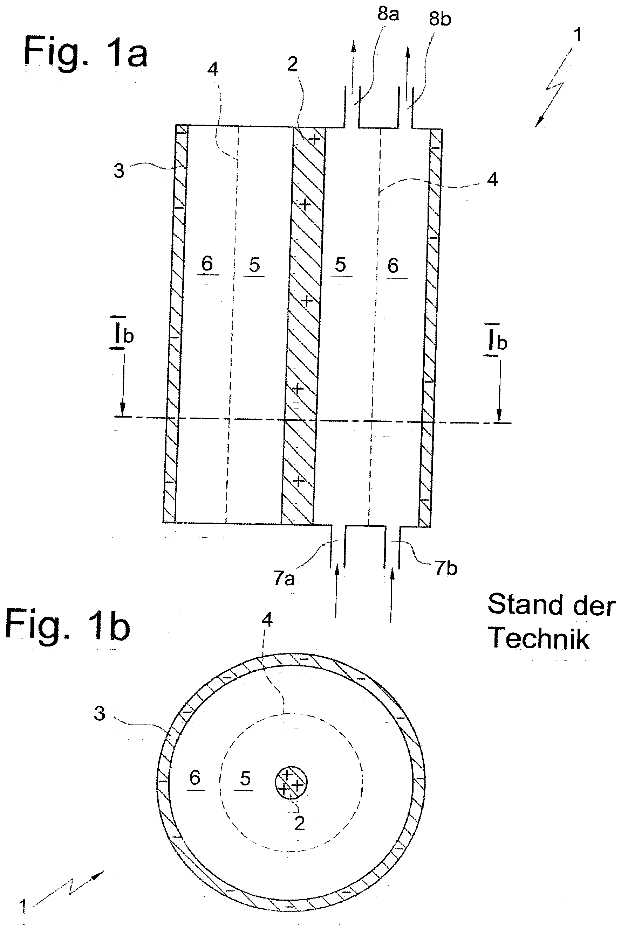

Fig. 1a zeigt exemplarisch ein derartiges Verfahren des Standes der Technik mit einer elektrochemischen Bearbeitungsvorrichtung 1 des Standes der Technik. Diese Vorrichtung 1 weist dabei eine stabförmige zentrale Anode 2 sowie eine zylindermantelartige, koaxial angeordnete Kathode 3 auf. Ebenfalls koaxial ist zwischen diesen eine Membrane 4 (bzw. ein Diaphragma 4) angeordnet, welche die Vorrichtung im Wesentlichen in zwei Kammern aufteilt: Eine innere Anodenkammer 5 sowie eine äußere Kathodenkammer 6. Jeder dieser beiden Kammern 5 und 6 ist ausweislich Fig. 1a ein separater Zulauf 7 zugeordnet sowie ein separater Auslauf 8. Wird durch die Zuläufe 7 eine wässrige Salzlösung zugeführt, welche typischerweise einen Salzgehalt von mehr als 0,5 Prozent aufweist, und wird zwischen der Anode 2 und der Kathode 3 ein Gleichstrom angelegt, so kann die eingeleitete Flüssigkeit in der Vorrichtung 1 chemisch aktiviert werden.

Die Membrane 4 wirkt hierbei vermischungshindernd für die in den Kammern 5 und 6 befindlichen Flüssigkeiten bzw. Lösungen. Diese Lösungen können sich also nicht vermischen. Die Membrane erlaubt hingegen ein Durchdiffundieren von Ionen der Lösungen in den Kammern 5 und 6, welche je nach Polarität zur Anode 2 oder Kathode 3 gelenkt werden. Hierdurch entsteht in der Anodenkammer 5 eine saure Anodenflüssigkeit, in der Kathodenkammer 6 eine alkalische Kathodenflüssigkeit.

Nach einer gewissen Bearbeitungszeit können diese beiden Flüssigkeiten die Vorrichtung 1 über die Ausläufe 8 verlassen und bilden hiernach zwei Reinigungsflüssigkeiten mit völlig unterschiedlichen Eigenschaften aus. Beispielsweise kann eine der Reinigungsflüssigkeiten einen pH-Wert von 2 bis 3,5 aufweisen und die andere einen pH-Wert von 10 bis 13. Es ist hierbei, um eine geeignete Reinigungsflüssigkeit zu erhalten, weiter bekannt, diese beiden separaten Flüssigkeiten in einem vorgegebenen Verhältnis zu mischen, um eine gewünschte Reinigungsflüssigkeit mit einem pH-Wert von zwischen 8 und 9 zu erhalten.

Das beschriebene Verfahren des Standes der Technik hat sich insofern als verbesserungswürdig herausgestellt, als dass der Aufbau mit einer filigranen Membran als relativ kompliziert gilt und insbesondere das Anmischen einer Reinigungsflüssigkeit aus zwei unterschiedlichen Ausgangsflüssigkeiten einen umständlichen Arbeitsschritt darstellt.

Es ist daher Aufgabe der vorliegenden Erfindung, ein vereinfachtes Verfahren der Wasserbearbeitung, insbesondere zur Herstellung einer Reinigungsflüssigkeit, bereitzustellen.

Die Erfindung löst diese Aufgabe gemäß einem ersten Aspekt mit den Merkmalen des Anspruches 1, insbesondere mit denen des Kennzeichenteils, und ist demnach dadurch gekennzeichnet, dass der Bereich zwischen den Elektroden des Elektrodenpaares vermischungsoffen ausgebildet ist, insbesondere frei von einer Membrane oder einem Diaphragma.

Mit anderen Worten besteht die Idee der Erfindung darin, die Membrane bzw. das Diaphragma wegzulassen und somit lediglich eine einzelne Kammer zwischen den beiden Elektroden bereitzustellen.

Hieraus folgt insbesondere, dass auch lediglich noch ein Einlass sowie ein einzelner Auslass notwendig sind, was den Aufbau der Bearbeitungsvorrichtung und die Durchführung des erfindungsgemäßen Verfahrens wesentlich vereinfacht. Insbesondere entsteht bei der Durchführung eines entsprechenden Verfahrens lediglich noch eine Flüssigkeit, welche direkt als Reinigungsflüssigkeit verwendet werden kann (wobei aufwendige Mischprozesse mehrerer Ausgangsflüssigkeiten bzw. eine entsprechende Dosiereinrichtung entfallen können).

Während bei der Vorrichtung gemäß dem Stand der Technik der Bereich zwischen den Elektroden nicht vermischungsoffen ausgebildet ist, da dort in der Regel eine Membrane oder ein Diaphragma angeordnet ist (welche eine Vermischung der Flüssigkeiten in den beiden Kammern verhindern) ist eine entsprechende Vermischungsbarriere gemäß der vorliegenden Erfindung gerade nicht vorgesehen. Insofern entfällt eine Vermischungsbarriere im Vergleich zum Stand der Technik.

Auch wenn gemäß dem Stand der Technik die Vermischungsbarrieren (Membrane oder Diaphragma) die Migration von Ionen (jedenfalls teilweise) erlauben, diesbezüglich keinen großen Widerstand darstellen, gliedern sie den Bereich zwischen den Elektroden im Stand der Technik doch in zwei vermischungsgetrennte Kammern.

Erfindungsgemäß ist hingegen vorgesehen, dass zwischen den Elektrodenpaaren im Wesentlichen eine gemeinsame (vermischungsoffene) Kammer vorgesehen ist. Mithin bilden die Elektroden genau eine Kammer (mit vorzugsweise genau einem Zulauf und genau einem Auslauf) zwischen sich aus oder sie sind gemeinsam in einer solchen Kammer angeordnet.

Vermischungsoffen bedeutet im Sinne der Erfindung, dass keine Vermischungsbarriere vorgesehen ist, welche das Vermischen von zwei Flüssigkeiten im Wesentlichen verhindert. Dies gilt nicht für einzelne Ionen.

Das erfindungsgemäße Verfahren betrifft insbesondere die Wasserverarbeitung oder -bearbeitung. Vorzugsweise dient das Verfahren zur Herstellung einer Reinigungsflüssigkeit. Als Reinigungsflüssigkeit kann diejenige Flüssigkeit genutzt werden, die die Bearbeitungsvorrichtung nach einer noch zu beschreibenden Bearbeitung bzw. Aktivierung verlässt.

Eine derartige Reinigungsflüssigkeit kann beispielsweise für die Reinigung oder Desinfektion von Oberflächen oder auch des menschlichen Körpers (beispielsweise vor oder bei Operationen oder zur Desinfektion des Körpers) vorgesehen sein, oder um Maschinen zu reinigen oder zu desinfizieren (wie beispielsweise Wasch- oder Reinigungsmaschinen) oder auch im Bereich der Agrarindustrie eingesetzt werden (beispielsweise zum Reinigen oder Desinfizieren von Früchten oder Gemüse oder von zu deren Verarbeitung genutzten Gerätschaften).

Alternativ kann das erfindungsgmäße Verfahren zur Wasseraufbereitung, z.B. von Schmutzwasser, verwendet werden oder sogar zur Herstellung von Wasserstoff (beispielsweise als Treibstoff für Fahrzeuge). Auch die Energieproduktion kann grundsätzlich von dem erfindungsgemäßen Verfahren betroffen sein.

Erfindungsgemäß wird eine wässrige Lösung genutzt, worunter im Sinne der vorliegenden Erfindung insbesondere ein Gemisch verstanden wird, bei welchem als Lösungsmittel Wasser eingesetzt wird. Vorzugsweise kann es sich bei dem Wasser um entkalktes Wasser handeln, also im Wesentlichen um weiches Wasser (beispielsweise mit einem deutschen Härtegrad von 0).

Die wässrige Lösung weist desweiteren einen gelösten Stoff auf, insbesondere um eine gewisse Ionisierung zu erreichen. Vorzugsweise weist die wässrige Lösung gelöstes Salz bzw. Natriumchlorid auf. Es kann sich erfindungsgemäß also um eine wässrige Salzlösung handeln.

Erfindungsgemäß kann vorgesehen sein, dass zur Vorbereitung des Verfahrens (oder als Teil des Verfahrens) entkalktem Wasser eine Salzlösung zugesetzt, insbesondere eingespritzt, wird. Beispielsweise kann die Salzlösung einen Salzgehalt von 20 bis 25 % aufweisen. Die wässrige Lösung, welche dann anschließend weiter bearbeitet bzw. aktiviert bzw. in die Bearbeitungsvorrichtung eingeleitet wird, weist erfindungsgemäß nur noch einen Salzgehalt von weniger als 0,35 % auf, vorzugsweise etwa 0,2 %, was deutlich weniger ist als im Stand der Technik, so dass die vorliegende Erfindung insbesondere eine kostengünstigere Herstellbarkeit einer Reinigungsflüssigkeit ermöglicht.

Bei der wässrigen Lösung kann es sich aber auch um Schmutzwasser oder kontaminiertes Wasser oder Ähnliches handeln.

Die wässrige Lösung kann in eine elektrochemische Bearbeitungsvorrichtung eingeleitet, insbesondere durch diese hindurchgeleitet, werden. Eine derartige Bearbeitungsvorrichtung weist erfindungsgemäß ein Elektrodenpaar auf, an welchem typischerweise ein Gleichstrom angelegt wird. Dieses Elektrodenpaar kann dann bei angelegtem Strom von besagter wässriger Lösung durchströmt oder durchflossen werden. Hierbei wird die wässrige Lösung typischerweise aktiviert, wobei insbesondere Ionen der Lösung zu den Elektroden hingezogen werden (je nach Ladung).

Eine der Elektroden ist typischerweise als Anode ausgebildet, die andere als Kathode.

Vorzugsweise können die beiden Elektroden koaxial angeordnet sein. In einem alternativen Ausführungsbeispiel hingegen nicht-koaxial und parallel.

Insbesondere kann vorgesehen sein, dass eine der beiden Elektroden eine Mantelfläche der Bearbeitungsvorrichtung bzw. einer Bearbeitungskammer bereitstellt (vorzugsweise die Kathode).

Die Bearbeitungsvorrichtung weist üblicherweise eine Bearbeitungskammer auf, insbesondere genau eine Bearbeitungskammer. Die Bearbeitungskammer ist typischerweise mit (genau einem) Einlass für die wässrige Lösung versehen und, insbesondere an ihrem anderen Ende, mit (genau einem) Auslass für die aktivierte wässrige Lösung bzw Flüssigkeit.

Die die Bearbeitungsvorrichtung durch den Auslass verlassende, aktivierte Lösung kann dann direkt als Reinigungsflüssigkeit verwendet werden, ohne dass sie einer weiteren Mischung oder eines weiteren Zusatzes bedarf. Hierfür kann die Reinigungsflüssigkeit beispielsweise in einen Aufbewahrungs- oder Vorratstank oder -behälter geleitet werden.

Gemäß einer besonders vorteilhaften Ausgestaltung der Erfindung wird die wässrige Lösung durch eine der Elektroden in eine Bearbeitungskammer in der Bearbeitungsvorrichtung eingeleitet und/oder aus dieser ausgeleitet. Die Elektrode kann hierfür wenigstens einen Kanal aufweisen, vorteilhafterweise deren zwei. Bei der Elektrode kann es sich beispielsweise um die Anode handeln. Diese Elektrode ist typischerweise zentral in der Bearbeitungsvorrichtung angeordnet.

Die Elektrode kann hierzu einen Eingang und/oder einen Ausgang aufweisen. Eingang und Ausgang sind typischerweise an entgegengesetzten Elektrodenseiten angeordnet.

Vorzugsweise ist dem Eingang- und/oder dem Ausgang der Elektrode ein Kammerzugang zugeordnet. Auf diese Weise kann die wässrige Lösung beispielsweise in einen Eingang der Elektrode eintreten und diese im Bereich eines Kammerzugangs verlassen (in die Kammer eintreten). Weiter kann vorgesehen sein, dass die wässrige Lösung, insbesondere nach einer Bearbeitung oder elektrochemischen Aktivierung, durch einen anderen Kammerzugang (oder Kammerausgang) der Elektrode wieder in die Elektrode gelangt und diese (sowie die ganze Bearbeitungsvorrichtung) an einem Ausgang verlässt.

Die Bearbeitungskammer weist dabei typischerweise Verbindungen zu beiden Elektroden auf. Beispielsweise kann die Elektrode gemäß Anspruch 2 koaxial von der Bearbeitungskammer umgeben sein.

In einem alternativen Ausführungsbeispiel können sowohl die Elektrode gemäß Anspruch 2 als auch die andere Elektrode des Paares gemeinsam in der Bearbeitungskammer angeordnet sein. Entscheidend ist erfindungsgemäß, dass zwischen den beiden Elektroden ein vermischungsoffener Bereich ausgebildet ist, also insbesondere keine Membrane oder Diaphragma angeordnet ist.

Besonders vorteilhafterweise ist vorgesehen, dass bei besagter Elektrode mindestens ein Endbereich hohl ausgebildet ist. Hierdurch kann sie einen Kanal für den Zugang oder für den Ausgang der wässrigen Lösung bereitstellen.

In einem besonders vorteilhaften Ausführungsbeispiel ist die Elektrode dabei in einem Mittelbereich massiv ausgebildet. Mit anderen Worten erstreckt sich der Kanal nicht durch die ganze Elektrode. Insbesondere kann ein erster Endbereich der Elektrode einen Kanal aufweisen (insbesondere für den Zugang zur Bearbeitungskammer) und der entgegengesetzte Endbereich kann einen weiteren Kanal aufweisen (insbesondere zum Ausgang aus der Bearbeitungskammer).

Die Elektrode (insbesondere die Anode) gemäß der Erfindung kann beispielsweise als Stabelektrode ausgebildet sein und/oder aus Titan bestehen.

Vorteilhafterweise weist die zentrale Elektrode eine Mischoxidbeschichtung auf.

Gemäß einer weiteren besonders vorteilhaften Ausgestaltung der Erfindung weist die Bearbeitungsvorrichtung einen Bypass auf. Dieser Bypass kann insbesondere einer Bearbeitungskammer der Bearbeitungsvorrichtung zugeordnet bzw. mit dieser verbunden sein.

Ein derartiger Bypass dient insbesondere dazu, einem Aufbau von Gas bzw. Luft in der Bearbeitungskammer entgegenzuwirken bzw. diese abzuleiten und zu verhindern, dass durch diese(s) noch unaktivierte Lösung durch die Kammer an den Ausgang gelangt.

Damit Gas oder Luft nicht in einem zu großen Anteil aus der Bearbeitungsvorrichtung mit noch unaktivierter wässriger Lösung ausgebracht wird, kann der Bypass dazu genutzt werden, das Gas bzw. die Luft zum Anfang der Bearbeitungskammer zurückzuführen. Die von dem Gas oder der Luft mitgeführte Flüssigkeit bzw. wässrige Lösung kann dann (nochmals) einen vollständigen Aktivierungsprozess durchlaufen.

Insbesondere bei Anordnungen, bei welchen die Bearbeitungsvorrichtung senkrecht ausgerichtet ist, steigt das Gas oder die Luft schnell nach oben, hin zum Kammerausgang, und kann hierbei ungewollt wässrige Lösung mit sich führen. Die Rückführung der wässrigen Lösung (mit dem Gas oder der Luft) bietet dabei eine verbesserte Qualität der fertiggestellten, aktivierten wässrigen Lösung bzw. der von dieser bereitgestellten Reinigungsflüssigkeit.

Damit noch nicht fertig bearbeitete bzw. aktivierte wässrige Lösung den Bypass nicht dazu nutzen kann, ohne eine Aktivierung vom Kammereingang zum Kammerausgang zu gelangen, weist der Bypass vorzugsweise ein Rückschlagventil auf, das eine Durchlaufrichtung hin vom Kammereingang zum Kammerausgang im Wesentlichen sperrt. Auf diese Weise kann sichergestellt werden, dass die wässrige Lösung nicht einfach den Umweg über den Bypass nimmt, was die Qualität der Reinigungsflüssigkeit natürlich vermindern würde.

Der Bypass weist hierzu einen Eingang im Bereich des Kammerausgangs und einen Ausgang im Bereich des Kammereingangs auf.

Gemäß einer weiteren vorteilhaften Ausgestaltung der Erfindung weist die wässrige Lösung einen Salzgehalt von weniger als 0,35 % auf, weiter vorzugsweise von weniger als 0,3%, weiter vorzugsweise von weniger als 0,2%, vorzugsweise von etwa 0,2%. Im Gegensatz zu den Salzgehalten der wässrigen Lösungen des Standes der Technik wird in dem vorliegenden Verfahren also eine weniger salzhaltige Lösung verwendet, was naturgemäß niedrigere Herstellungskosten für die Reinigungsflüssigkeit bedeutet, da der Wassergehalt in der wässrigen Lösung höher ist.

Bei dem Lösungsmittel der wässrigen Lösung kann es sich insbesondere um entkalktes oder weiches Wasser handeln. Dieses kann zur Erstellung der wässrigen Lösung mit einer konzentrierten, salzhaltigen Lösung vermischt werden. Eine entsprechende Einspritzeinrichtung kann gemeinsam mit der Bearbeitungsvorrichtung zu einem System gehören. Dieses System kann auch eine Zuleitung oder ein Vorrat des (entkalkten) Wassers oder gegebenenfalls sogar einen Entkalkungsfilter oder Ähnliches aufweisen.

Vorteilhafterweise ist vorgesehen, dass die aktivierte wässrige Lösung nach ihrem Austritt aus der Bearbeitungsvorrichtung bzw. der Bearbeitungskammer einen pH-Wert von zwischen 7 und 10, insbesondere von zwischen 8 und 9, aufweist. Dieses Ziel wird insbesondere durch die Verwendung einer erfindungsgemäßen Bearbeitungsvorrichtung, welche im Bereich des Elektrodenpaares mischungsoffen ausgebildet ist, erreicht.

Im Gegensatz zum Stand der Technik kann also bereits die aktivierte wässrige Lösung selber als Reinigungsflüssigkeit verwendet werden, insbesondere da sie einen entsprechenden pH-Wert aufweist.

Vorteilhafterweise weist die aktivierte wässrige Lösung bzw. die Reinigungsflüssigkeit ein Redoxpotential von zwischen 650 und 800 mV auf. Eine derartige Flüssigkeit hat sich als ideales Reinigungsmittel herausgestellt.

Gemäß einer besonders vorteilhaften Ausgestaltung der Erfindung ist dem Elektrodenpaar genau ein Fluideinlass zugeordnet. Mit anderen Worten kann die Kammer, in welcher sich das Elektrodenpaar befindet oder welche von dem Elektrodenpaar ausgebildet wird, genau einen Fluideinlass für die wässrige Lösung aufweisen. Alternativ oder zusätzlich kann diese Kammer auch genau einen Fluidauslass aufweisen. Dies ist im Gegensatz zum Stand der Technik zu sehen, bei welchem jedem Elektrodenpaar jeweils zwei Fluideinlässe und zwei Fluidauslässe zugeordnet sind, da insbesondere auch zwei unterschiedlich aktivierte Reinigungsflüssigkeiten entstehen bzw. aus der Bearbeitungsvorrichtung gelangen können.

Es kann also insbesondere vorgesehen sein, dass die Bearbeitungsvorrichtung genau einen Fluideinlass und/oder einen Fluidauslass aufweist.

Gemäß der bevorzugsten Ausgestaltung der Erfindung bilden die Elektroden des Elektrodenpaares gemeinsam eine Kammer der Bearbeitungsvorrichtung auf. Hierzu kann eine der Elektroden die andere beispielsweise umgeben, insbesondere koaxial. Bei einer der Elektroden, vorzugsweise der zentralen Elektrode, kann es sich um eine Stabelektrode handeln, die andere kann eine mantelartige, insbesondere zylindermantelartige, Form aufweisen und vorzugsweise eine Mantelfläche der Bearbeitungsvorrichtung bereitstellen.

Die beiden Elektroden werden erfindungsgemäß an einen Gleichstromkreislauf angeschlossen. Die zwischen Ihnen geführte wässrige Lösung kann in diesem Fall auch als lonenleiter oder Elektrolyt bezeichnet werden.

Gemäß einer Ausführungsform sind die Elektroden des Elektrodenpaares gemeinsam in einer Kammer der Bearbeitungsvorrichtung angeordnet. Sie können beispielsweise parallel angeordnet sein. In dem Fall bilden sie die Kammer nicht zwischen sich aus, sondern sind in der Kammer angeordnet. Sie können aber auch beispielsweise jede die Hälfte des Wandbereichs der Kammer ausbilden oder Ähnliches.

Gemäß einem weiteren Aspekt der Erfindung besteht die Aufgabe darin, eine optimierte Reinigungsflüssigkeit bereitzustellen. Die Erfindung löst diese Aufgabe mit den Merkmalen des Anspruches 9. Insofern wird eine Reinigungsflüssigkeit bereitgestellt, welche nach einem der beschriebenen Verfahren hergestellt wird. Vorzugsweise kann die aktivierte wässrige Lösung, welche die Bearbeitungssvorrichtung verlässt, unmittelbar als Reinigungsflüssigkeit dienen. In diesem Fall wird sie vorzugsweise nicht mit weiteren Zusätzen versehen und/oder nicht weiter bearbeitet bzw. nicht mit einer anderen Lösung oder einer anderen Flüssigkeit gemischt.

Für die Reinigungsflüssigkeit sollen alle oben bereits genannten Vorteile und/oder Besonderheiten (beispielsweise auch hinsichtlich des genannten pH-Werts) gelten.

Schließlich betrifft ein letzter Aspekt der Erfindung eine elektrochemische Bearbeitungsvorrichtung. Die Aufgabe wird darin gesehen, eine einfachere elektrochemische Bearbeitungsvorrichtung zu schaffen als aus dem Stand der Technik bekannt.

Die Erfindung löst diese Aufgabe mit den Merkmalen des Anspruches 10. An dieser Stelle sei angemerkt, dass sämtliche in Bezug zum erfindungsgemäßen Verfahren oder der erfindungsgemäßem Reinigungsflüssigkeit beschriebenen Vorteile oder Besonderheiten auch für die elektrochemische Bearbeitungsvorrichtung gelten sollten bzw. als im Zusammenhang mit dieser offenbart gelten sollen. Lediglich aus Gründen der Leserlichkeit der vorliegenden Anmeldung wird auf diesbezügliche Wiederholungen verzichtet.

Weitere Vorteile der Erfindung ergeben sich aus den gegebenenfalls nicht zitierten Unteransprüchen sowie aus der nun folgenden Figurenbeschreibung. Darin zeigen:
- Fig. 1a und Fig. 1b: ein erfindungsgemäßes Verfahren bzw. eine erfindungsgemäße Vorrichtung des Standes der Technik, welche oben bereits beschrieben wurde, in zwei unterschiedlichen Ansichten,
- Fig. 2a: eine erfindungsgemäße Bearbeitungsvorrichtung zur Durchführung eines erfindungsgemäßen Verfahrens in einer sehr schematischen, seitlichen Schnittansicht,
- Fig. 2b: die Vorrichtung gemäß Fig. 2a in einer schematischen Schnittansicht, etwa entlang der Schnittlinie IIb-IIb in Fig. 2a,
- Fig. 3: eine perspektivische, isometrische Außenansicht der Bearbeitungsvorrichtung gemäß Fig. 2, unter zusätzlicher Darstellung von Befestigungsstreben,
- Fig. 4: in einer im Verhältnis zu Fig. 3 etwas verkippten Ansicht, ein Ausschnitt der Vorrichtung nach Fig. 3 bei abgebautem Mantelzylinder, insbesondere zur Darstellung der Kammereingänge in der zentralen Elektrode,
- Fig. 5: eine sehr schematische Unteransicht der erfindungsgemäßen Vorrichtung gemäß den Fig. 2 bis 4, etwa entlang des Ansichtspfeils V in Fig. 3, jedoch bei abmontierter unterer Montageplatte, insbesondere zur Verdeutlichung des Flüssigkeitseingangs/kanals in der zentralen Elektrode,
- Fig. 6: in einer Ansicht, etwa gemäß Fig. 2b, ein zweites Ausführungsbeispiel einer erfindungsgemäßen Vorrichtung zur Ausführung eines erfindungsgemäßen Verfahrens, bei welcher die Elektroden jedoch nicht koaxial, sondern versetzt parallel angeordnet sind, und
- Fig. 7: eine sehr schematische Darstellung eines erfindungsgemäßen Systems zur Durchführung des erfindungsgemäßen Verfahrens, aufweisend eine Bearbeitungsvorrichtung gemäß einer der Figuren 2 bis 6.

Der nachfolgenden Figurenbeschreibungen und den Patentansprüchen sei vorangestellt, dass gleiche oder vergleichbare Teile gegebenenfalls mit identischen Bezugszeichen versehen sind, teilweise unter Hinzufügung kleiner Buchstaben oder von Apostrophen.

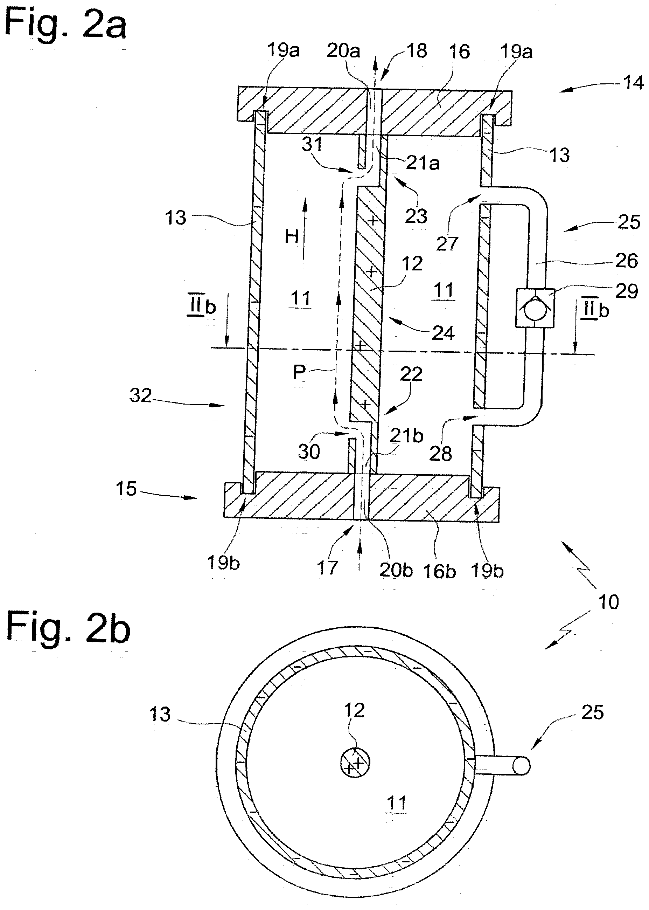

Zunächst sei anhand von Fig. 2a eine erfindungsgemäße Bearbeitungsvorrichtung 10 zum Einsatz in einem erfindungsgemäßen Verfahren beschrieben:
So bildet die Bearbeitungsvorrichtung 10 in ihrem Inneren grundsätzlich eine Bearbeitungskammer 11 aus, welche in dem dargestellten Ausführungsbeispiel, wie insbesondere auch in Fig. 2b ersichtlich, im Querschnitt im Wesentlichen kreisförmig ausgebildet ist.

Die Bearbeitungskammer 11 ist insbesondere vermischungsoffen ausgebildet, d.h. im Vergleich zum Ausführungsbeispiel des Standes der Technik gemäß Fig. 1 ist in ihrem Inneren weder eine Membrane noch ein Diaphragma oder eine sonstige Vermischungsbarriere angeordnet.

Zentral in der Bearbeitungskammer 11 ist eine erste Elektrode 12 in Form einer Stabanode angeordnet. Koaxial zur Anode 12 ist die zweite Elektrode 13 angeordnet, welche zylindermantelartig ausgebildet ist und gleichzeitig den Außenmantel der Vorrichtung 10 bereitstellt.

Zur Bearbeitung oder Aktivierung einer nicht dargestellten wässrigen Lösung sind die beiden Elektroden 12 und 13 an Gleichstrom angeschlossen, so dass sie Teile eines elektrischen Stromkreises sind. Der Anschluss der beiden Elektroden 12 und 13 kann auf herkömmliche Art und Weise erfolgen, ist in den Figuren aus Gründen der Übersichtlichkeit jedoch bewusst nicht dargestellt.

Die erfindungsgemäße Vorrichtung 10, welche in dem Ausführungsbeispiel im Wesentlichen zylinderartig ausgebildet ist, weist sowohl in ihrem Kopfbereich 14 als auch in ihrem Fußbereich 15 jeweils eine, insbesondere scheibenartig, vorzugsweise kreisförmig ausgebildete Montageplatte 16 auf. Vorzugsweise sind die beiden Montageplatten 16a und 16b identisch ausgebildet.

Die Montageplatten 16a und 16b weisen zunächst jeweils eine umlaufende, im Ausführungsbeispiel kreisrunde, Aufnahmerinne 19 zur Aufnahme der zylinderartig ausgestalteten äußeren Elektrode 13 auf (in mindestens einer der Montageplatten 16 wird typischerweise ein nicht dargestellter, elektrischer Anschluss für die Elektroden vorgesehen sein).

Außerdem weisen die Montageplatten 16 jeweils einen zentralen, kanalartigen Durchlass 20 auf, dessen Außenseite dem Auslauf 18 bzw. dem Zulauf 17 der Vorrichtung 10 zugeordnet ist.

Diese Durchlässe 20a bzw. 20b fluchten mit der Elektrode 12, insbesondere mit jeweils einem Kanal 21 in einem Ende der Elektrode 12.

Hierzu ist die Elektrode 12 im Wesentlichen stabförmig und, sowohl in ihrem ersten Endbereich 22 als auch in ihrem zweiten Endbereich 23, hohl ausgestattet, nämlich zur Ausbildung der besagten Kanäle 21a bzw. 21b. Die Kanäle 21a bzw. 21b erstrecken sich also im Wesentlichen axial in den Endbereichen 22 und 23 der Elektrode 12.

In ihrem zentralen Bereich 24 ist die Elektrode 12 hingegen nichthohl, sondern massiv ausgebildet.

Schließlich zeigen die Figuren 2a und 2b noch einen sogenannten Bypass 25, wobei es sich um eine Einrichtung handelt, welche insbesondere eine Flüssigkeitsleitung 26 aufweist, die fest an der Zylinderaußenseite bzw. der Elektrode 13 angeordnet ist.

Die Leitung 26 bildet dabei einen Bypasseingang 27 sowie einen Bypassausgang 28 im Bereich der Bearbeitungskammer 11 aus.

Desweiteren weist der Bypass 25 ein Rückschlagventil 29 auf, welches den Durchlass von Flüssigkeit durch den Bypass 25 aus Richtung vom Ausgang 28 hin zum Eingang 27 verhindert, während der Durchfluss aus Richtung des Eingangs 27 hin zum Ausgang 28 erlaubt wird.

Das erfindungsgemäße Verfahren soll nun anhand von Fig. 2a wie folgt beschrieben werden:
Erfindungsgemäß wird der Vorrichtung 10 über den Zulauf 17 eine wässrige Lösung, insbesondere eine wässrige Salz-Lösung bzw. Natriumchloridlösung zugeführt, welche einen Salzgehalt von weniger als 0,35%, vorteilhafterweise 0,2%, aufweist.

Hierbei handelt es sich mithin um eine ionisierte Flüssigkeit, welche in der elektrochemischen Vorrichtung 10 aktiviert werden soll.

Dafür liegt an den Elektroden 12 und 13 während des erfindungsgemäßen Verfahrens ein Gleichstrom an, so dass die Elektroden 12 und 13 Teil eines elektrischen Stromkreises sind, in welchem die wässrige Lösung, welche zu aktivieren ist, das leitende Medium bzw. das Elektrolyt bereitstellt.

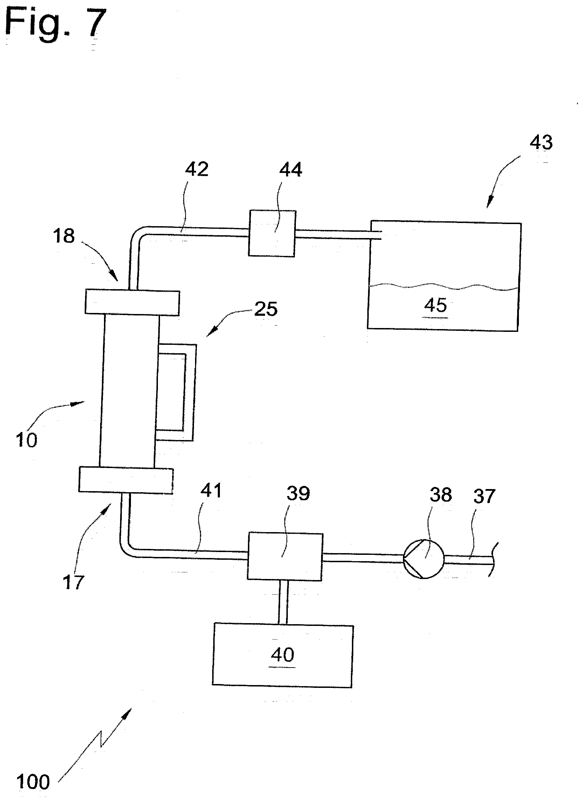

Auf die Herstellung der wässrigen Lösung wird im Zusammenhang mit der Beschreibung der Fig. 7 weiter unten noch genauer eingegangen. Jedenfalls tritt die elektrische Lösung im Bereich des Zulaufes 17 im Wesentlichen senkrecht in die Vorrichtung 10 ein, durchströmt den Durchlass 20b und gelangt in den Kanal 21b der Anode 12. Dieser Kanal 21b bildet in der Elektrode 12 mehrere Kammereinlässe 30 aus, von denen in Fig. 12a jedoch lediglich einer ersichtlich ist.

Auf diesem Weg gelangt die zu aktivierende wässrige Lösung in die Kammer 11.

Der Weg der zu aktivierenden wässrigen Lösung durch die Vorrichtung 10 ist in Fig. 2a mit einer gestrichelten Pfeillinie P angedeutet. Wie aus Fig. 2a ersichtlich, durchströmt die Lösung dabei die Kammer 11 entlang einer Hauptströmungsrichtung H und wird somit dem elektrischen Feld zwischen der Anode 12 und der Kathode 13 ausgesetzt.

Die Ionen in der wässrigen Lösung können dabei auf bekannte Weise, je nach Ladung, zu der Anode bzw. zu der Kathode hingezogen werden und sich dort ansammeln. Diesen Prozess nennt man Aktivierung der wässrigen Lösung, welche hierdurch Eigenschaften erhält, die sich von einer herkömmlichen Salzlösung deutlich unterscheiden und es im Endeffekt ermöglichen, die aktivierte wässrige Lösung später als Reinigungsflüssigkeit zu verwenden.

Die Besonderheit der Erfindung besteht nun mithin darin, dass es sich lediglich um eine wässrige Lösung handelt, welche eine (gemeinsame) Kammer 11 zwischen den Elektroden 12 und 13 durchströmen kann, wobei diese Kammer 11 nicht in Anoden- und Katoden-Kammern unterteilt ist, wie beim Stand der Technik. Mithin ist sie vermischungsoffen ausgebildet, so dass keine Trennung in zwei unterschiedliche Flüssigkeiten wie beim Stand der Technik vorgenommen wird.

Nachdem die wässrige Lösung die Kammer 11 im Wesentlichen durchströmt hat, kann sie im Bereich eines Kammerauslasses 31 in den Kanal 21a im zweiten Endbereich 23 der Anode 12 eintreten, den Durchlass 20a der oberen Montageplatte 16a durchströmen und auf diese Weise (durch den Auslauf 18) die Vorrichtung 10 verlassen.

Die am Auslauf 18 austretende Flüssigkeit kann nunmehr unmittelbar als Reinigungsflüssigkeit verwendet werden und auf später (in Bezug auf Fig. 7) noch zu beschreibende Weise abgeleitet bzw. gesammelt werden.

Bezüglich des Verfahrens nach Fig. 2a sei schließlich angemerkt, dass nicht gänzlich ausgeschlossen wird, dass Gas- oder Lufteinschlüsse in die Kammer 11 gelangen. Diese steigen in der Kammer 11 üblicherweise nach oben bzw. in die Hauptströmungsrichtung H (wobei bezüglich des Ausführungsbeispiels anzumerken ist, dass die Vorrichtung 10 im Wesentlichen senkrecht gemäß der Figurendarstellung in der Papierebene angeordnet ist). Diese Gas- oder Lufteinschlüsse können dabei Teile der wässrigen Lösung mit sich reissen und dadurch verhindern, dass diese mitgerissene wässrige Lösung hinreichend aktiviert wird.

Um diesem Effekt entgegenzuwirken, weist die Vorrichtung 10 den bereits genannten Bypass 25 auf. Im oberen Bereich der Vorrichtung 10 ist demnach der Bypasseingang 27 vorgesehen, durch welchen insbesondere die genannten Luft- oder Gaseinschlüsse sowie die mitgerissene Flüssigkeit oder Lösung in den Bypass eintreten können. Über die Leitung 26 wird diese mitgerissene Lösung und/oder auch das Gas bzw. die Luft wieder in den unteren Bereich 32 bzw. Eingangsbereich 32 der Vorrichtung 10 geführt (entgegen der Hauptströmungsrichtung H), so dass die zunächst mitgerissene Flüssigkeit die Kammer 11 erneut durchlaufen und diesmal hinreichend aktiviert werden kann.

Damit die zu aktivierende Flüssigkeit bzw. die Lösung nicht direkt nach ihrem Eintritt in die Kammer 11 über den Kammereinlass 30 in die Leitung 26 des Bypasses 25 gerät (und somit aus dem Einflussbereich des elektrischen Feldes heraus), weist der Bypass 25 besagtes Rückschlagventil 29 auf. Mit anderen Worten kann die im Wesentlichen unaktivierte Lösung, welche "fälschlicherweise" in den Bypassausgang 28 eintritt, den Bypass 25 nicht einfach durchströmen und am Bypasseingang 27 austreten, da dass Rückschlagventil genau dies verhindert.

Zusammenfassend steigert die Bypassleitung 25 also die Qualität der erzielten Reinigungsflüssigkeit, wobei abschließend anzumerken ist, dass in dem Ausführungsbeispiel gemäß den Figuren zwar eine Reinigungsflüssigkeit erstellt wird, die identische Vorrichtung aber ohne weiteres anders genutzt werden könnte, z.B. zur Reinigung von Schmutzwasser oder Ähnlichem.

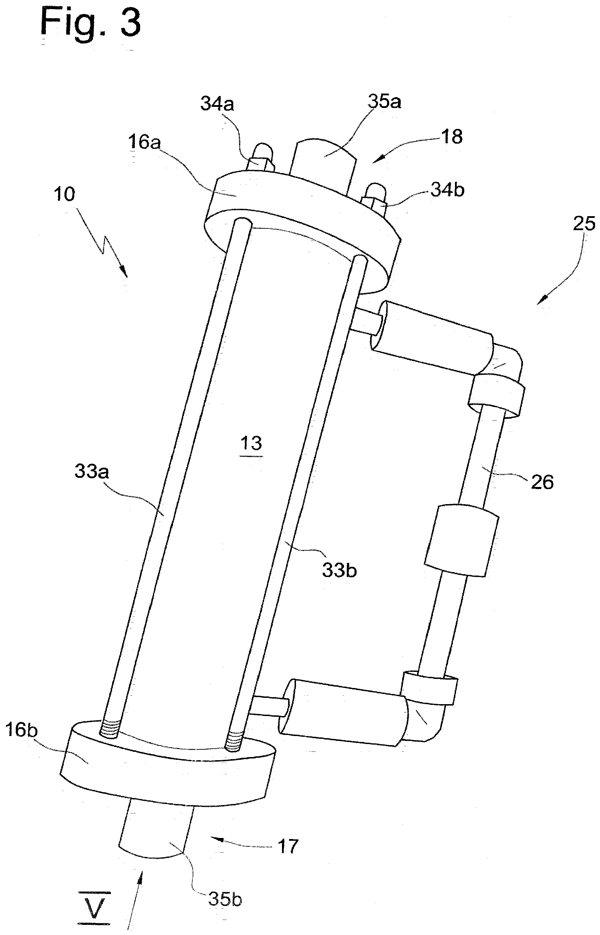

Fig. 3 zeigt dann in einer perspektivischen, isometrischen Außenansicht noch einmal die erfindungsgemäße Bearbeitungsvorrichtung 10 unter zusätzlicher Darstellung von Befestigungsstreben 33, welche in Fig. 2 insbesondere aus Gründen der Übersichtlichkeit noch fortgelassen wurden.

So können zwischen den beiden Montageplatten 16 (beispielsweise vier) Befestigungsstreben 33 vorgesehen sein (wovon in Fig. 3 aus perspektivischen Gründen lediglich zwei erkennbar sind), welche für die Stabilität der Vorrichtung 10 sorgen. Diese Befestigungsstreben 33 können in ihren Endbereichen entsprechende Gewinde ausbilden und zwecks Montage die Montageplatten 16a bzw. 16b durchgreifen. Beim Austritt aus den Montageplatten 16 können die Enden der Befestigungsstreben 33 dann mit Haltemitteln, wie Kontermuttern 34, an beiden Enden befestigst werden (bezüglich des unteren Endes ist dies aus perspektivischen Gründen in Fig. 3 nicht dargestellt).

An dieser Stelle sei angemerkt, dass in Fig. 2a lediglich aus Gründen der Übersichtlichkeit in den Montageplatten 16a bzw. 16b keine Durchtrittsöffnungen für die Befestigungsstreben 33 dargestellt sind, da Fig. 2a lediglich eine schematische Darstellung des erfindungsgemäßen Herstellungsverfahrens zeigen soll.

Schließlich zeigt Fig. 3 im Bereich von Zulauf 17 und Auslauf 18 noch Anschlussstutzen 35, welche beispielsweise dem Anschluss von Zulauf- oder Ablaufschläuchen dienen können (in Fig. 2a ebenfalls der Übersichtlichkeit halber fortgelassen).

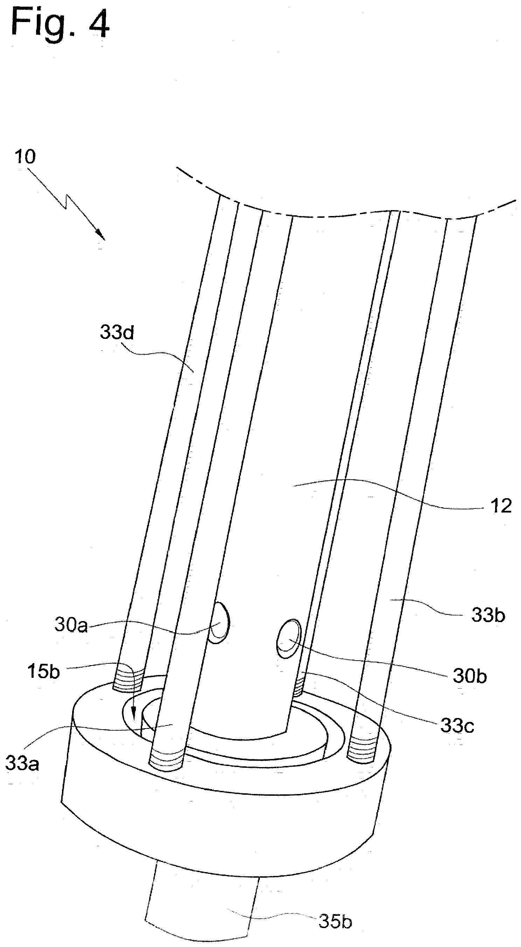

Fig. 4 zeigt dann in einer zu Fig. 3 leicht verkippten bzw. angehobenen Perspektive den unteren Teil der erfindungsgemäßen Vorrichtung 10 gemäß Fig. 3, in welcher der als Elektrode ausgebildete Außenmantel 13 der Vorrichtung 10 fortgelassen ist.

Diese Darstellung soll insbesondere die Kammereinlässe 30 in der Stabanode 12 verdeutlichen, von denen in Fig. 4 zwei (von beispielsweise vieren) dargestellt sind. Über die Kammereinlässe 30 kann die zu aktivierende Lösung, welche insbesondere über den Anschlussstutzen 35b in die Vorrichtung 10 eingeführt wird, die Anode 12 zunächst verlassen und in die Kammer 11 zwischen der (in Fig. 4 ausgebauten) Mantelelektrode 13 und der Anode 12 eintreten. Im oberen, bezüglich Fig. 4 nicht dargestellten Bereich weist die Anode 12 identische Kammerauslässe, bzw. Kammereinlässe, 31 auf.

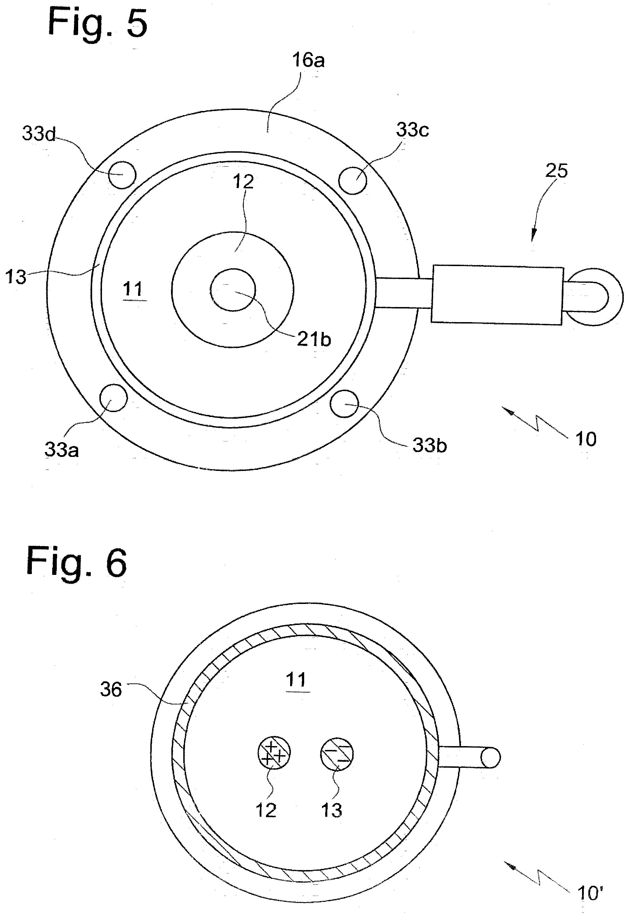

Die Kammerauslässe 30 gemäß Fig. 4 gehen von dem bereits beschriebenen Kanal 21b im ersten Endbereich 22 der Anode 12 ab, was eine sehr schematische Unteransicht gemäß Fig. 5, etwa gemäß Ansichtspfeil V in Fig. 3, verdeutlichen soll: In dieser Ansicht ist insbesondere die untere Montageplatte 16b fortgelassen, so dass der untere Eingang zum Kanal 21b sichtbar wird. Da die Vorrichtung 10 im Wesentlichen symmetrisch aufgebaut ist, könnte es sich bei der Fig. 5 grundsätzlich auch um eine Aufsicht auf die Vorrichtung 10 handeln, bei welcher die obere Montageplatte 16a abgebaut wäre.

Fig. 6 zeigt ein zweites Ausführungsbeispiel 10' einer erfindungsgemäßen Vorrichtung in einer Ansicht etwa gemäß Fig. 2b. Bei diesem Ausführungsbeispiel erfolgt das erfindungsgemäße Verfahren im Wesentlichen identisch zu dem oben beschriebenen, mit dem einzigen Unterschied, dass hier der Mantelbereich 36 der Vorrichtung 10' nicht als Elektrode ausgebildet ist. Er kann beispielsweise aus Kunststoff bestehen. In diesem Fall ist die Kathode 13 ebenfalls als Stabelektrode ausgebildet. Sowohl die Anode 12 als auch die Kathode 13 sind in diesem Ausführungsbeispiel also beide innerhalb der Kammer 11 angeordnet, nämlich im Wesentlichen parallel, aber versetzt.

Ansonsten unterscheiden sich die Vorrichtungen 10' und 10 nicht. Die einzige Ausnahme stellt hierbei der Flüssigkeitszulauf bzw. -auslauf dar, welcher typischerweise nicht zentral in die Kammer erfolgt, sondern typischerweise vielmehr durch eine der beiden dezentral angeordneten Elektroden 12 oder 13, jedoch typischerweise weiterhin auf die oben beschriebene Art und Weise, wonach eine der beiden Elektroden 12 oder 13 in ihren Endbereichen 22 und 33 mit einem entsprechenden Kanal versehen ist. Die andere Elektrode 12 oder 13 kann beispielsweise vollständig massiv ausgebildet sein. Alternativ kann aber auch eine der beiden Elektroden zentral in der Kammer 11 angeordnet sein und die andere dezentral (aber parallel).

Abschließend zeigt die Fig. 7 eine sehr schematische Darstellung eines Systems 100 zur Durchführung des erfindungsgemäßen Verfahrens, welches eine erfindungsgemäße Vorrichtung 10 (oder auch 10', dies ist für das vorliegende Ausführungsbeispiel egal) aufweist:
So weist das System 100 zunächst eine Wasserzuleitung 37 auf, mit welcher dem erfindungsgemäßen System bereits entkalktes oder weiches Wasser zugeführt wird. Alternativ kann das erfindungsgemäße System auch einen Wasserfilter zum Entkalken des Wassers aufweisen.

Das entkalkte Wasser 37 wird über eine Förderpumpe 38 in Richtung zur Vorrichtung 10 hin gefördert.

Hierbei durchströmt es eine Einspritzeinrichtung 39, welche dem entkalkten Wasser eine konzentrierte Salzlösung aus einem Behälter 40 einspritzt. Während die konzentrierte Lösung im Behälter 40 einen Salzgehalt von 20 - 25 % aufweist, weist die auf diese Weise hergestellte wässrige Lösung in der Leitung 41, welche somit aus entkalktem Wasser sowie eingespritzter hochkonzentrierter Salzlösung hergestellt wird, einen Salzgehalt von weniger als 0,35%, vorzugsweise etwa 0,2% auf.

Diese Lösung kann in die Vorrichtung 10, im Bereich des Zulaufes 17, einströmen, und in der Vorrichtung 10 auf die beschriebene Art aktiviert werden. Im Bereich des Auslaufs 18 kann sie die Vorrichtung 10 verlassen, und über eine Ableitung 42 beispielsweise in einen Sammelbehälter 43, insbesondere nach Art eines Tanks, abgeleitet werden.

Damit der Tank 43 nicht überläuft, kann dem Tank 43 beispielsweise ein Magnetventil 44 vorgeschaltet sein. Eine Dosiereinrichtung zum Mischen zweier Flüssigkeiten wie im Stand der Technik ist jedoch nicht (mehr) notwendig.

Die im Tank 44 gesammelte aktivierte Lösung 45 kann direkt als Reinigungsflüssigkeit 45 verwendet werden und beispielsweise in kleinere Kanister, Flaschen oder Ähnliches abgefüllt werden.

Diese Flüssigkeit 45 hat dabei einen pH-Wert von zwischen 8 und 9 und ein Redoxpotential von zwischen 650 und 800 mV.

## Patentansprüche

1. Verfahren, insbesondere zur Herstellung einer Reinigungsflüssigkeit (45), umfassend das Durchleiten einer wässrigen Lösung durch eine, insbesondere elektrochemische, Bearbeitungsvorrichtung (10), welche ein Elektrodenpaar (12, 13) umfasst, das von der wässrigen Lösung, insbesondere zu deren Aktivierung, durchströmt wird, **dadurch gekennzeichnet, dass** der Bereich (11) zwischen den Elektroden (12, 13) des Elektrodenpaares vermischungsoffen ausgebildet ist, insbesondere frei von einer Membrane oder einem Diaphragma (4).

2. Verfahren nach Anspruch 1, **dadurch gekennzeichnet, dass** die wässrige Lösung durch eine der Elektroden (12), insbesondere die Anode, in eine Bearbeitungskammer (11) der Bearbeitungsvorrichtung (10) eingeleitet und/oder aus dieser ausgeleitet wird.

3. Verfahren nach Anspruch 2, **dadurch gekennzeichnet, dass** die Elektrode (12) in mindestens einem Endbereich (22, 23), insbesondere zur Bereitstellung eines Kanals (21), hohl ausgebildet ist, vorzugsweise aber massiv in einem Mittelbereich (24).

4. Verfahren nach einem der voranstehenden Ansprüche, **dadurch gekennzeichnet, dass** die Bearbeitungsvorrichtung (10) einen, insbesondere ein Rückschlagventil (29) aufweisenden, Bypass (25) aufweist.

5. Verfahren nach einem der voranstehenden Ansprüche, **dadurch gekennzeichnet, dass** die der Bearbeitungsvorrichtung (10) zugeleitete wässrige Lösung, für welche insbesondere entkalktes Wasser verwendet wird, einen Salzgehalt von weniger als 0,35%, vorzugsweise etwa 0,2%, aufweist.

6. Verfahren nach einem der voranstehenden Ansprüche, **dadurch gekennzeichnet, dass** die aktivierte wässrige Lösung (45) nach ihrem Austritt aus der Bearbeitungsvorrichtung (10) einen PH-Wert von zwischen 8 und 9 aufweist und/oder ein Redoxpotential von zwischen 650 und 800 mV.

7. Verfahren nach einem der voranstehenden Ansprüche, **dadurch gekennzeichnet, dass** dem Elektrodenpaar (12, 13) genau ein Fluideinlass (17) und/oder ein Fluidauslass (18) zugeordnet ist, die Bearbeitungsvorrichtung (10) insbesondere genau einen Fluideinlass (17) und einen Fluidauslass (18) aufweist.

8. Verfahren nach einem der voranstehenden Ansprüche, **dadurch gekennzeichnet, dass** die Elektroden (12, 13) des Elektrodenpaares gemeinsam eine Kammer (11) der Bearbeitungsvorrichtung (10) ausbilden, wozu sie vorzugsweise koaxial angeordnet sind, oder dass die Elektroden (12, 13) des Elektrodenpaares gemeinsam, vorzugsweise parallel, in einer Kammer (11) der Bearbeitungsvorrichtung (10') angeordnet sind.

9. Reinigungsflüssigkeit (45), hergestellt in einem Verfahren nach einem der voranstehenden Ansprüche, insbesondere **dadurch gekennzeichnet, dass** die aktivierte wässrige Lösung unmittelbar, vorzugsweise ohne weitere Zusätze, als Reinigungsflüssigkeit (45) dient.

10. Elektrochemische Bearbeitungsvorrichtung (10), insbesondere zum Einsatz in einem Verfahren nach einem der Ansprüche 1 bis 8, welche ein Elektrodenpaar (12, 13) umfasst, das von einer wässrigen Lösung durchströmbar ist, **dadurch gekennzeichnet, dass** der Bereich zwischen den Elektroden (12, 13) des Elektrodenpaares vermischungsoffen ausgebildet ist, insbesondere frei von einer Membrane oder einem Diaphragma (14).
